# EUROPEAN PATENT SPECIFICATION

(11) **EP 3 448 605 B1**
(45) Date of publication and mention of the grant of the patent: **28.10.2020**
(21) Application number: 17723735.1
(22) Date of filing: 12.04.2017
(51) Int. Cl.: B22F 3/22, B29C 45/44, B29C 45/26, B29C 33/38, B29C 33/56, B29C 33/40, B22F 5/00, B29C 33/30

(54) **METHOD, HOUSING AND APPARATUS FOR MANUFACTURING A COMPONENT**
VERFAHREN, GEHÄUSE UND VORRICHTUNG ZUR HERSTELLUNG EINES BAUTEILS
PROCÉDÉ, LOGEMENT ET APPAREIL DE FABRICATION D'UN COMPOSANT

(30) Priority: 25.04.2016 GB 201607117
(43) Date of publication of application: 06.03.2019
(73) Proprietor: Birmingham High Performance Turbomachinery Limited, Birmingham, West Midlands B13 8JY (GB)
(72) Inventor: JIANG, Kyle, Birmingham West Midlands B13 8JY (GB)
(74) Representative: Wilson Gunn
(86) International application number: PCT/GB2017/051018
(87) International publication number: WO 2017/187133

(56) References cited:
- DE-A1- 10 322 060
- DE-A1-102014 104 680
- US-A- 4 384 607
- US-A1- 2009 224 135
- US-B1- 6 547 210

## Description

### Technical Field of the Invention

The present invention relates to a method for manufacturing a component. The method is particularly, but not exclusively, directed at producing a net shape or near net shape metallic and/or ceramic component.

### Background to the Invention

It is known to produce components using an injection moulding (IM) process. In a conventional IM process, the material from which the component is to be formed is injected into a hollow mould using an injection moulding machine. The material injected is commonly referred to as a "feedstock" and may comprise a homogeneous mixture of different materials. The feedstock is solidified in the mould to form a moulded part which is then taken out of the mould in a process known as "de-moulding". The moulded part may be subject to further processing to result in the final component. The IM process can be used to form components from a range of materials including, for example, polymers and resins.

More recently has seen the development of a powder injection moulding (PIM) process. In a conventional PIM process, the feedstock is produced by mixing a polymeric binder with metal and/or ceramic powders and other ingredients. The feedstock is injected into a hollow mould using an injection moulding machine similar to those used for injection moulding plastics. Once the material has cooled and solidified, it is de-moulded and the resultant moulded part is known as a "green part". A portion of the binder material is removed from the green part using solvent, thermal furnaces, catalytic process, or a combination of methods to produce a so-called "brown part". The brown part is sintered to condense the material resulting in a component which may be net shape or near net shape.

As an alternative to injection moulding, it is also known to press a feedstock into the mould.

The known IM, PIM, and press moulding processes use a hard mould which can withstand high pressure without deforming or breaking. Such hard moulds are typically made from metallic and/or ceramic materials. However, the use of hard moulds limits the potential geometry of the components that can be produced due to difficulties in de-moulding.

A further known method of manufacturing components uses a soft mould. The process involves the manufacture of a master mould and the production of a mirrored soft mould from the master mould. In one known method, the soft mould is formed from low-cost polymers such as polydimethysiloxane (PDMS). Moulded parts are formed in the soft moulds by filling them with feedstock in flowable form and allowing the feedstock to solidify. Once the feedstock has solidified, the soft mould material is peeled-off to reveal the moulded part. This method has been used in particular to manufacture ceramic components from a ceramic powder which is incorporated with a binder and other ingredients to form a feedstock in the form of a slurry. The slurry consolidates in the mould to form the green part. Once removed from the mould, the green part is subjected to a de-binding and sintering process resulting in a net shape or near net shape component.

Use of a soft mould method overcomes some of the disadvantages of a hard mould, allowing for de-moulding from more complex geometries. Nevertheless, it has drawbacks. Filling and de-moulding are often carried out manually and individually, resulting in a low speed process which is more suitable for research than commercial application. The soft moulds cannot withstand high pressure during the filling process, which tends to result in less dense components, and the soft moulds are not suitable for use with injection moulding machines.

US 6,547,201 B1 discloses the use of a sacrificial insert for injection moulding. The sacrificial insert can be shaped to form both the female and male mould cavity and is designed to be destructively removed from the product without substantially damaging the product after moulding. In one embodiment, the sacrificial insert is melted to remove it from the moulded product.

There is then a need for an alternative method of manufacturing a component which overcomes, or at least mitigates, some or all of the drawbacks of the known methods.

There is a need in particular for an alternative method of moulding a net shape or near net shape component which overcomes, or at least mitigates, some or all of the drawbacks of the known methods.

There is also a need for alternative apparatus for manufacturing a component which overcomes, or at least mitigates, some or all of the drawbacks of the known apparatus.

### Summary of the Invention

According to a first aspect of the invention, there is provided a method of manufacturing a component, the method comprising:
a. providing a mould in a meltable material, the mould defining a mould cavity;
b. supporting the mould in a housing having an internal cavity in which the mould is located whilst being supported by the housing;
c. filling the mould cavity with a feedstock under pressure whilst the mould is supported in the housing;
d. allowing the feedstock to solidify in the mould to form a moulded part; and
e. subsequently melting the mould to release the moulded part
   the method characterised in that the mould is dimensioned to be an interference fit in the internal cavity of the housing and in that the method comprises producing the mould using a 3D printer and pressing the mould into the internal cavity of the housing, the exterior surface of the mould where it engages with the housing being softened to allow the mould to be pressed into the cavity such that it is tightly engaged by the surface(s) of the housing.

In an embodiment, the mould defines the mould cavity in a first exterior surface and has at least one further exterior surface, the housing contacting and supporting mould on the at least one further exterior surface of the mould whilst the mould cavity is filled. The mould may have at least two further exterior surfaces, the housing contacting and supporting mould on each further exterior surface whilst the mould cavity is filled.

The mould may have a cylindrical peripheral side wall and the, or each, internal cavity of the housing may have a cylindrical portion within which the peripheral side wall is a tight fit. The method may comprise heating the housing to soften an exterior surface of the mould as the mould is pressed into the housing cavity.

The housing has rigid support surfaces which engage the mould so that the housing is operative to support the mould whilst it is filled under pressure to prevent the mould deforming and/or breaking outwardly.

In an embodiment, the housing comprises at least two parts which define at least one internal cavity for receiving a mould, the two parts being movable between an open configuration in which a mould can be inserted into/removed from the housing and a closed configuration in which the at least one internal cavity is enclosed between the parts, at least one of the parts defining an inlet for directing feedstock into a mould held in the at least one internal cavity when the two parts are in the closed configuration.

The feedstock is flowable and may be a liquid, a slurry, or a powder.

The feedstock may comprise a polymer or a resin.

The feedstock may comprise a metallic and/or ceramic powder. The feedstock may comprise binder mixed with the metallic and/or ceramic powder. The moulded part may be a green part when initially demoulded and the method may further comprise sintering the green part. Where the feedstock comprises a binder, the method may comprise removing at least a portion of the binder from the moulded part prior to the step of sintering.

The meltable material may be a polymeric material, which may be a wax or resin.

The meltable material may contain Sulphonamide Derivatives, or a combination of Sulphonamide Derivatives with Polyester Resin and/or Benzoate Derivatives.

The meltable material has a lower melting point than the moulded part. The melting point of the meltable material is preferably sufficiently below that of the moulded part that the moulded part can be de-moulded by melting the mould without damaging the moulded part or adversely affecting its mechanical properties beyond acceptable limits.

The meltable material may have a melting point in the range of 50 to 600 degrees Celsius, or a melting point in the range of 60 to 500 degrees Celsius, or a melting point in the range of 70 to 400 degrees Celsius, or a melting point in the range of 80 to 300 degrees Celsius, or a melting point in the range of 80 to 200 degrees Celsius, or a melting point in the range of 80 to 150 degrees Celsius.

The step of filling the mould with the feedstock whilst the mould is supported in the housing may comprise injecting the feedstock into the mould. Alternatively, the step of filling the mould with the feedstock whilst the mould is supported in the housing method may comprise pressing the feedstock into the mould in the housing. The method may comprise subjecting the filled mould to a vacuum prior to the feedstock solidifying. The housing may fully enclose the mould whilst it is filled and may have an inlet through which the feedstock is introduced into the mould cavity.

### Detailed Description of the Invention

In order that the invention may be more clearly understood embodiments thereof will now be described, by way of example only, with reference to the accompanying drawings, of which:
Figure 1 is a perspective view of a turbine wheel produced using a method in accordance with an aspect of the invention;
Figure 2 is a perspective view of a mould for use in a method in accordance with an aspect of the invention;
Figure 3 is a perspective view of an assembly comprising a first part of a housing in which the mould of Figure 2 has been inserted prior to filling the mould as part of a method in accordance with an aspect of the invention;
Figure 4 is a view similar to that of Figure 3 but showing the assembly after the mould has been filled and the feedstock allowed to solidify to form a green part;
Figure 5 shows the mould and green part removed from the housing prior to de-moulding;
Figure 6 shows the green part after the mould has been melted in a de-molding step of a method in accordance with an aspect of the invention; and
Figure 7 is a perspective view of an alternative embodiment of a housing for supporting a plurality of moulds suitable for use in an injection moulding process as part of a method in accordance with an aspect of the invention.

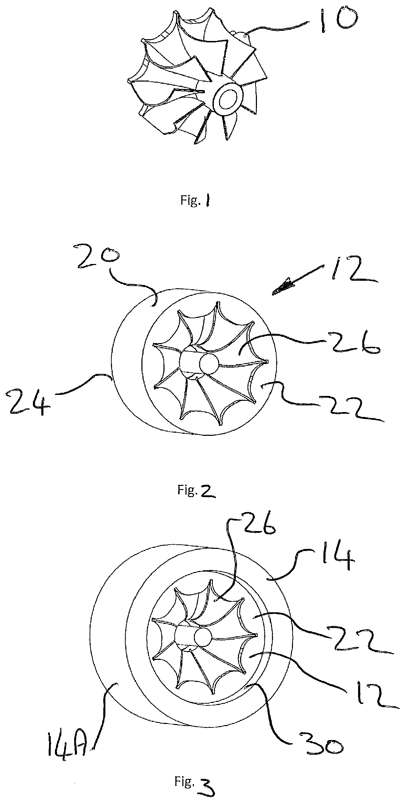

A method of manufacturing a ceramic turbine wheel 10 in accordance with an embodiment of the present invention will now be described by way of example only with reference to the accompanying drawings. However, it should be appreciated that the method in accordance with the invention can be adapted to produce a wide range of components from a range of materials including: polymers, resins, metallic/ceramic powders. The method is particularly suited to the manufacture of a net shape or near net shape component having a relatively complex geometry but is not limited to this application. The turbine wheel 10 is illustrated in Figure 1.

The primary steps in a method of manufacturing the turbine wheel in accordance with an embodiment of the present embodiment include:
1. producing a mould 12 of the turbine 10 in a meltable material;
2. supporting the mould 12 in a housing 14 whilst it is filled under pressure with a feedstock 16, which in this embodiment is in the form of a slurry comprising ceramic powder and binder;
3. allowing the feedstock 16 to consolidate in the mould to form a moulded green part 18; and
4. melting the mould 12 to release the moulded green part 18.

In this embodiment, the moulded part 18 when released from the mould is a so called "green part" and the method further comprises the steps of de-binding the green part to remove at least a portion of the binder and sintering the part after de-binding.

The mould 12, as illustrated in Figure 2, is produced from a meltable material using a 3D printer. Conveniently, a Computer Aided Design (CAD) model of the mould is produced and used by the 3D printer to form the mould 12.

The term "meltable material" as used herein should be understood as referring to a material that has a lower melting point than the moulded part, so that the moulded part can be de-moulded by melting the mould without damaging or adversely affecting the mechanical properties of the moulded part. The meltable material should be solid and capable of retaining its shape at the temperatures at which the mould is filled and held whilst the feedstock solidifies. A material with a melting point in the range of 80 to 150 degrees Celsius is suitable for many applications. However, materials having a higher or lower melting point can be used depending on the melting point of moulded part and the temperatures the mould will be subjected to prior to de-moulding. If necessary, the temperature of the working environment can be controlled to ensure the mould does not unintentionally melt before de-moulding, or at least before the feedstock has solidified sufficiently to retain its shape independently of the mould. The meltable material could have a melting point in the range of 50 to 600 degrees Celsius, or a melting point in the range of 60 to 500 degrees Celsius, or a melting point in the range of 70 to 400 degrees Celsius, or a melting point in the range of 80 to 300 degrees Celsius, or a melting point in the range of 80 to 200 degrees Celsius, or a melting point in the range of 80 to 150 degrees Celsius.

A wide range of meltable of materials can be used to form the mould including polymeric materials such as wax or resin. Where the mould is to be produced using a 3D printer, the meltable material should be compatible for use with the printer. The meltable material may, for example, contain Sulphonamide Derivatives, or a combination of Sulphonamide Derivatives with Polyester Resin and/or Benzoate Derivatives. In an embodiment, the mould 12 is made from Solidscape ® 3Z Model which has a melting point of between 95 to 115 degrees Celsius and is manufactured by Solidscape, Inc. of 316 Daniel Webster Highway, Merrimack, NH 03054 USA.

The mould 12 in this embodiment is generally cylindrical having a cylindrical side wall 20 and first and second end faces 22, 24. A mould cavity 26 is defined in the first end face 22, whilst the second end face 24 is generally planer. The mould cavity 26 is profiled to define the negative of the shape of the desired component, in this case the turbine wheel 10.

Typically the materials from which the mould 12 are made will be solid and capable retaining their shape prior to the de-moulding stage but tend not to be hard or strong and so would be liable to deform and/or break, typically outwardly, if filled under pressure without support. The housing 14 encloses the mould 12 and supports it during the filling stage so that the mould does not deform and/or break as it is filled with the feedstock 16 under pressure. The housing 14 according to the present embodiment is made from steel but the housing 14 could be made from any material suitable for withstanding the required pressure and for rigidly supporting the mould. The housing will generally be made from materials that have sufficient hardness and strength to resist deformation of the mould as it is filled under pressure. Suitable materials include, as examples only, metallic materials such as steel, aluminium, beryllium-copper alloy, and/or composite materials.

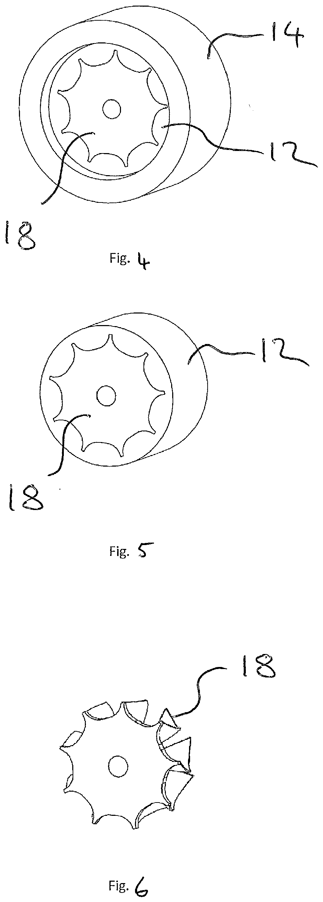

The housing 14 as illustrated in Figures 3 and 4 has two parts, a first part 14A with an internal cavity 30 for receiving a mould and a second part (not shown) which is releasably mountable to the first part so that the mould 12 is encapsulated within the assembled housing 14. The second part may be in the form of a lid which can be attached to the first part to form a sealed enclosure. The internal cavity is configured so that the mould is a close, interference fit to prevent the mould deforming outwardly as it is filled under pressure At least one of the parts has an inlet including one or more fluid passages through which the feedstock can be injected into the mould cavity 26 whilst the mould is encapsulated in the housing. Alternatively, at least one of the parts can incorporate, or have an inlet adapted to receive, a mechanism for pressing feedstock into the mould cavity 26.

The internal cavity 30 in the first part 14A of the housing has a cylindrical side wall portion 32 within which the cylindrical side wall 20 of the mould 12 is a close, interference fit. In practice, the outer diameter of the side wall 20 of the mould 12 is slightly larger than the internal diameter of cylindrical side wall portion 32 of the housing cavity 30 and the exterior surface of the mould where it engages with the housing may be softened (partially melted) to allow the mould to be pressed into the cavity with an interference fit to ensure that the mould is tightly engaged by the surface(s) of the housing which define the internal cavity 30 and support the mould. The housing can be heated in order to soften the outer surface of the mould where it engages the internal surface of the cavity 30 as the mould is pressed into the cavity.

The first part 14A of the housing 14 is in the form of a cylindrical tube having bore which defines the cylindrical side wall portion 32 and which is closed at one end by a planar end wall (not shown). The mould 12 is placed in the bore with its second end face 24 directed toward and supported by the planar end wall at the closed end of the bore.

Figure 3 illustrates the empty mould 12 in the first part 14A of the housing 14 prior to second part being assembled. At least those parts of the housing 14 which support the mould 12 are rigid and strong so as to prevent the mould from deforming outwardly and/or breaking when it is filled under pressure. However, it will be appreciated that not every part of the housing 14 need be rigid, provided that as a whole the housing 14 is able to support the mould 12 and contain the pressure as the mould 12 is filled. References to the housing being rigid should be understood accordingly.

In the present embodiment, the feedstock is injected into the mould cavity 26 whilst the mould is enclosed in the assembled housing 14 at a pressure in region of 30 MPa until the mould is full. An injection moulding machine similar to that used in conventional IM processes can be used. It will be appreciated the injection pressure can vary depending on the nature of the feedstock material and the size and geometry of the component being produced. Typically, the housing 14 is closed with the mould 12 inside and placed in an injection machine where the feedstock is injected into the mould cavity through the housing inlet. The feedstock is then allowed to solidify (consolidate) within the mould cavity whilst the mould is supported by the housing to form the moulded part 18. This process can be aided by opening the housing after the mould cavity has been filled to expose the top of the injected feedstock to air until it becomes solid as illustrated in Figure 4.

In an additional optional step, the filled mould 14 can be subject to a vacuum before the feedstock solidifies so as to eliminate any air bubbles that may be trapped in the feedstock in the mould cavity. This can be achieved by placing the housing with the filled mould in a vacuum environment where the mould is subjected to a vacuum. The housing 14 may be opened prior to applying a vacuum.

Once the feedstock has consolidated in the mould 12 to form the moulded part 18, the mould 12 containing the moulded part 18 is removed from the housing 14. The housing may be heated to release the mould. After the mould has been released from the housing, the mould is heated in order to order to melt the mould and release the moulded part 18, which is illustrated in Figure 6. The mould may be heated in an oven or on a hot plate, for example. In one embodiment, the mould 12 is loaded into a tray or similar receptacle and placed in an oven where it is heated to just above the melting point for the mould material. The filled mould 12 may be placed on a raised support in the tray, such as a mesh through which the mould material can flow when it melts, so that mould material drains away from the moulded part below the support to leave the moulded part 18 on the raised support mesh. The meltable material may be collected to be reused.

The moulded part 18 in this embodiment is a green part and once it has been released from the mould it is subjected to a de-binding process and is sintered. De-binding may typically comprise heating the part 18 to a few hundred degrees whilst sintering may typically comprise heating the part 18 to a temperature of around 1000 degrees C for metals, and over 1500 degrees C for ceramics. After sintering, the turbine wheel 10 is a largely finished component, though it can be subject to further process steps such as machine finishing where required. In an alternative arrangement which may be suitable in some applications, the mould could be melted whilst in the housing to de-mould the moulded part 18.

### Example 1

A specific example using the above method will now be described.
1. A CAD model of a mould was produced.
2. A mould made from Solidscape ® 3Z Model was produced from the CAD model using a 3D printer.
3. The mould was placed in the internal cavity of a first part of a steel housing and a second part of the housing secured to the first part to enclose the mould inside the assembled housing.
4. A feedstock in the form of an alumina slurry was prepared in the following way:
   High purity Al2O3 powder with an average particle size of 1.5 µm (Dynamic Ceramic Corp. UK) was used. Duramax ® D-3005 (Rohm and Haas, PA, USA) was used as the dispersant, Duramax ® B-1000 and B-1007 (Rohm and Haas) was used as the binder, NaOH and HCl were used to adjust the pH of slurries in all processes, and distilled water was used as the solvent. All samples were weighed to ±0.001 g in accuracy and typical batch size was 27 g. The mixing process consisted of the following steps:
   (a) 0-1.0 g/ml Duramax® D-3005 was added to distilled water and under constant magnetic stirring for 30 min. Afterward, alumina powder was slowly poured into the solution and then stirred for 3 h;
   (b) 0.75 wt.% (B-1000+B-1007) was added as binder, with pH adjusted and then stirred for 2 h;
   (c) the slurry was poured into a plastic bottle, covered, and sealed. The bottle was then put on a shaking machine and shaken for 7 h, and then left overnight to make the slurry more uniform;
   (d) before use, the slurry was placed in a vacuum condition until all residual bubbles were removed.
5. The prepared ceramic slurry was injected into the mould at 30 MPa pressure via an inlet port in the removable end closure.
6. After the mould was filled, the metal housing was taken out of the injection machine and the end closure opened to expose the top of the injected slurry component to air over night until the slurry became solid to form a consolidated green ceramic moulded part within the mould;
7. The filled mould was removed from the housing by placing the first part of metal housing half way into boiling water but avoiding submerge it completely in the water to release the mould and then taking the mould out of the housing;
8. The filled mould was placed in a petri dish and the loaded dish left in an oven preheated to 150 degrees C for 30 mins to allow the mould material to melt away from the green ceramic moulded part.
9. The green moulded part was subject to a de-binding and sintering process by placing it on a 99.9% alumina substrate in a high-temperature furnace. The furnace heated to 600°C at a low ramping rate at 75°C/h to decompose the binder and dispersant in the component in a de-binding stage and then heated to 1,600°C at a high ramping rate of 200°C/h for sintering. The temperature remained at 1,600°C for 2 h before the furnace was cooled down to room temperature.

The above described method can be adapted to produce a range of components from different materials as will be appreciated by those skilled in the art, provided that the moulded part can withstand the temperature used for demoulding. Where a component is formed from a feedstock comprising metallic and/or ceramic binder, the moulded part will be a green part which is typically subject to a de-binding process and sintered to form the final component. However, parts moulded from other materials, such as polymers and resins, need not be subject to these further process steps and may be the finished component or close to the finished component. Parts could be moulded using the method according to an aspect of the invention from a polymeric slurry for example, provided the cured polymer can withstand the demoulding temperature.

It should also be noted that the shape of the mould 12 and the design of the housing 14 can be varied. Typically, the shape of the mould 12 will be determined, or at least influenced by, the shape of the component 10 being moulded and the housing 14 designed accordingly to support the mould 12 so that it does not break or deform when the feedstock is introduced into the mould cavity under pressure.

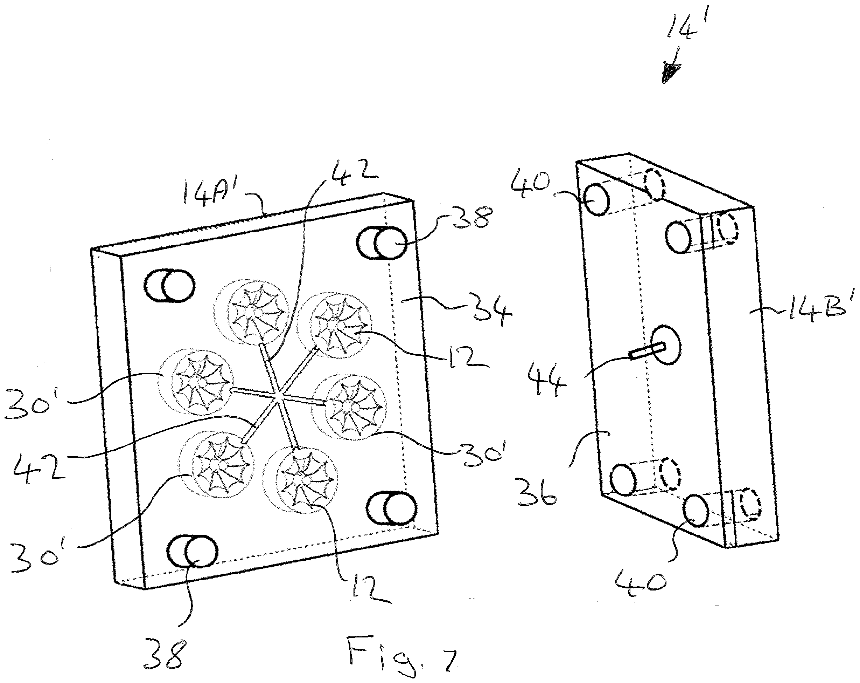

It should also be appreciated that a housing 14 can be configured to support more than one mould 12 so that multiple components can be moulded at the same time. An example of such a housing 14' for use in a largely conventional injection moulding machine is illustrated in Figure 7. The housing 14' in this embodiment comprises a first part 14A' and a second part 14B' in the form of a pair of plates with mating planar faces 34, 36. The two plates 14A', 14B' are similar in construction to the plates used to form a mould in a conventional injection moulding machine, except that the plates 14A', 14B' define a number of internal cavities 30' for supporting a corresponding number of moulds 12 made of a meltable material. In the housing 14' as shown, there are six internal 30' cavities but the number of internal cavities can be varied. The parts 14A', 14B' can be made of any suitable material such as steel, aluminium, and beryllium-copper alloy, for example.

The first part 14A' has a number of guide pins 38 which project from its mating face 34 and which are received in corresponding holes 40 in the second part 14B' in order to aligned the parts when they are assembled together. Other arrangements for aligning the parts can be used. The internal cavities 30' for the moulds 12 are defined in the first part 14A' and open at its mating face 34. The cavities 30' in this case are in the form of blind cylindrical bores similar to that described above in relation to the first embodiment of the housing 14 but the shape of the cavities can be varied to suit the shape of the moulds 12. The internal cavities 30' are arranged in a circle on a common pitch circle dimeter about a centre of the plate. A number of channels or runners 42 are defined in the mating face 34 of the first part 14A' connecting each internal cavity 30' with a sprue bush 44 at the centre of the second part 14B' which forms an inlet through which the feedstock is injected into the housing. In use, moulds 12 of a meltable material are located in each of the internal cavities 30' in the first part 14A' and the two parts 14A', 14B' of the housing are assembled together with their mating faces 34, 36 in tight contact. Feedstock is injected through sprue bush 44 and travels along the runners 42 to fill each of the moulds 12. Once the feedstock has solidified, the two parts of the housing 14' are separated and the moulds 12 with the moulded parts inside are ejected from the cavities. The first part 14A' could be provided with ejector pins or the like to press the moulds 12 out. Given the relatively soft nature of the mould material, the ejector pins may be of relatively large cross sectional area and could take the form of pistons which define all or part of the closed ends of the cavities 30. The housing 14' could include heating means to partially melt or soften the moulds 12 when they are inserted in and/or removed from the cavities and/or the housing could include a cooling system to help in controlling solidification of the feedstock. For use in an injection moulding machine, the second part 14B' may be a fixed part which is connected with an injection unit and the first part 14A' may be a movable part which can be clamped to the second part to close the housing 14' and moved away from the second part for insertion of empty moulds 12 and the removal of filled moulds.

The housing 14' in accordance with the second embodiment is particularly suited to use in a commercial manufacturing arrangement where it is more cost effective to be able to mould a number of components at the same time.

The above embodiments are described by way of example only. Many variations are possible without departing from the scope of the invention as defined in the appended claims.

## Claims

1. A method of manufacturing a component (10), the method comprising:
a. providing a mould (12) in a meltable material, the mould defining a mould cavity (26);
b. supporting the mould in a housing (14) having an internal cavity (30) in which the mould is located whilst being supported by the housing;
c. filling the mould cavity (26) with a feedstock under pressure whilst the mould is supported in the housing;
d. allowing the feedstock to solidify in the mould to form a moulded part (18); and
e. subsequently melting the mould (12) to release the moulded part;
the method **characterised in that** the mould (12) is dimensioned to be an interference fit in the internal cavity (30) of the housing, the method comprising producing the mould using a 3D printer and pressing the mould into the internal cavity (30) of the housing, the exterior surface of the mould where it engages with the housing being softened to allow the mould to be pressed into the cavity such that it is tightly engaged by the surface(s) of the housing.

2. A method as claimed in claim 1, wherein the mould defines the mould cavity in a first exterior surface and has at least one further exterior surface, the housing contacting and supporting the mould on the at least one further exterior surface of the mould whilst the mould cavity is filled.

3. A method as claimed in claim 1 or claim 2, wherein the mould (12) has a cylindrical peripheral side wall (20) and the internal cavity (30) of the housing has a cylindrical portion (32) within which the peripheral side wall (20) is an interference fit.

4. A method as claimed in any one of claims 1 to 3, wherein the method comprises heating the housing (14) to soften an exterior surface of the mould (120 as the mould is pressed into the housing cavity (30).

5. A method as claimed in any one of the preceding claims, wherein the housing (14) is operative to rigidly support the mould (12) whilst it is filled.

6. A method as claimed in any one of the preceding claims, wherein the feedstock comprises a polymer or a resin.

7. A method as claimed in any one of claims 1 to 5, wherein the feedstock comprises a metallic and/or ceramic powder.

8. A method as claimed in claim 7, wherein the feedstock comprises binder mixed with the metallic and/or ceramic powder

9. A method as claimed in claim 7 or claim 8 wherein the feedstock is a slurry.

10. A method as claimed in any one of claims 7 to 9, wherein the moulded part (18) is a green part and the method further comprises sintering the green part.

11. A method as claimed in any one of the preceding claims, wherein the meltable material is a polymeric material, which may be a wax or resin.

12. A method as claimed in any one of the preceding claims, wherein the meltable material has a melting point in the range of 50 to 600 degrees Celsius, or a melting point in the range of 60 to 500 degrees Celsius, or a melting point in the range of 70 to 400 degrees Celsius, or a melting point in the range of 80 to 300 degrees Celsius, or a melting point in the range of 80 to 200 degrees Celsius, or a melting point in the range of 80 to 150 degrees Celsius.

13. A method as claimed in any one of the preceding claims, wherein the step of filling the mould with the feedstock whilst the mould is supported in the housing comprises injecting the feedstock into the mould or pressing the feedstock into the mould in the housing.

## Patentansprüche

1. Verfahren zur Herstellung eines Bauteils (10), wobei das Verfahren aufweist:
a) Bereitstellen einer Form (10) aus einem schmelzbaren Material, wobei die Form einen Formhohlraum (26) definiert,
b) Halten der Form in einem Gehäuse (14) mit einem inneren Hohlraum (30), in welchem die Form angeordnet ist, während sie durch das Gehäuse gehalten ist,
c) Füllen des Formhohlraumes (26) mit einem Füllmaterial unter Druck, während die Form in dem Gehäuse gehalten ist,
d) Zulassen eines Verfestigen des Füllmaterials in der Form, um ein Gussteil (18) zu bilden, und
e) anschließendes Aufschmelzen der Form (12), um das Gussteil auszulösen,
**dadurch gekennzeichnet,**
**dass** die Form (12) zum Bilden einer Presspassung in dem inneren Hohlraum (30) des Gehäuses dimensioniert ist, wobei das Verfahren ein Herstellen der Form unter Verwendung eines 3D-Druckers und ein Einpressen der Form in den inneren Hohlraum (30) des Gehäuses umfasst, wobei die Außenfläche der Form, wo diese mit dem Gehäuse zusammenwirkt, aufgeweicht wird, um ein Einpressen der Form in den Hohlraum zu ermöglichen, so dass diese durch die Fläche/Flächen des Gehäuses fest erfasst ist.

2. Verfahren nach Anspruch 1,
wobei die Form den Formhohlraum mit einer ersten Außenfläche vorgibt und zumindest eine weitere Außenfläche aufweist, wobei das Gehäuse die Form an der zumindest einen weiteren Außenfläche der Form kontaktiert und hält, während der Formhohlraum gefüllt wird.

3. Verfahren nach Anspruch 1 oder nach Anspruch 2,
wobei die Form (12) eine zylindrische Umfangsseitenwand (20) und der innere Hohlraum (30) des Gehäuses einen zylindrischen Abschnitt (32) aufweist, in welchem die Umfangsseitenwand (20) mit einer Presspassung angeordnet wird.

4. Verfahren nach einem der Ansprüche 1 bis 3,
wobei das Verfahren ein Aufheizen des Gehäuses (14) aufweist, um eine Außenfläche der Form (12) zu erweichen, wenn die Form in den Gehäusehohlraum (30) eingepresst wird.

5. Verfahren nach einem der vorhergehenden Ansprüche,
wobei das Gehäuse (14) zum starren Halten der Form (12) betreibbar ist, während diese befüllt wird.

6. Verfahren nach einem der vorhergehenden Ansprüche,
wobei das Füllmaterial ein Polymer oder ein Harz aufweist.

7. Verfahren nach einem der Ansprüche 1 bis 5,
wobei das Füllmaterial ein metallisches und/oder keramisches Pulver aufweist.

8. Verfahren nach Anspruch 7,
wobei das Füllmaterial ein Bindemittel umfasst, welches mit dem metallischen und/oder keramischen Pulver vermischt ist.

9. Verfahren nach Anspruch 7 oder Anspruch 8,
wobei das Füllmaterial eine Suspension ist.

10. Verfahren nach einem der Ansprüche 7 bis 9,
wobei das Gussteil (18) ein Grünteil ist und das Verfahren weiter ein Sintern des Grünteiles umfasst.

11. Verfahren nach einem der vorhergehenden Ansprüche,
wobei das aufschmelzbare Material ein Polymermaterial ist, welches ein Wachs oder ein Harz sein kann.

12. Verfahren nach einem der vorhergehenden Ansprüche,
wobei das aufschmelzbare Material einen Schmelzpunkt im Bereich von 50° bis 600°C oder einen Schmelzpunkt in einem Bereich vom 60° bis 500°C oder einen Schmelzpunkt in einem Bereich von 70° bis 400°C oder einen Schmelzpunkt in einem Bereich von 80° bis 300°C oder einen Schmelzpunkt in einem Bereich von 80° bis 200°C oder einen Schmelzpunkt in einem Bereich von 80° bis 150°C aufweist.

13. Verfahren nach einem der vorhergehenden Ansprüche,
wobei der Verfahrensschritt des Füllens der Form mit dem Füllmaterial, während die Form in dem Gehäuse gehalten ist, ein Einspritzen des Füllmaterials in die Form oder ein Einpressen des Füllmaterials in die Form in dem Gehäuse umfasst.

## Revendications

1. Procédé de fabrication d'un composant (10), le procédé comprenant :
a. la fourniture d'un moule (12) en un matériau pouvant fondre, le moule définissant une cavité de moule (26) ;
b. le support du moule dans un logement (14) ayant une cavité interne (30) dans laquelle le moule est situé tout en étant supporté par le logement ;
c. le remplissage de la cavité de moule (26) avec une charge d'alimentation sous pression tandis que le moule est supporté dans le logement ;
d. le fait de laisser la charge d'alimentation se solidifier dans le moule pour former une pièce moulée (18) ; et
e. puis la fusion du moule (12) pour libérer la pièce moulée ;
le procédé étant **caractérisé en ce que** le moule (12) est dimensionné pour être un ajustement serré dans la cavité interne (30) du logement, le procédé comprenant la production du moule à l'aide d'une imprimante 3D et le pressage du moule dans la cavité interne (30) du logement, la surface extérieure du moule où il entre en prise avec le logement étant ramollie pour permettre au moule d'être pressé dans la cavité de telle sorte qu'il est parfaitement mis en prise par la(les) surface(s) du logement.

2. Procédé selon la revendication 1, dans lequel le moule définit la cavité de moule dans une première surface extérieure et comporte au moins une autre surface extérieure, le logement étant en contact avec le moule et supportant ce dernier sur l'au moins une autre surface extérieure du moule tandis que la cavité de moule est remplie.

3. Procédé selon la revendication 1 ou la revendication 2, dans lequel le moule (12) présente une paroi latérale périphérique cylindrique (20) et la cavité interne (30) du logement présente une partie cylindrique (32) dans laquelle la paroi latérale périphérique (20) est un ajustement serré.

4. Procédé selon l'une quelconque des revendications 1 à 3, dans lequel le procédé comprend le chauffage du logement (14) pour ramollir une surface extérieure du moule (12) quand le moule est pressé dans la cavité de logement (30).

5. Procédé selon l'une quelconque des revendications précédentes, dans lequel le logement (14) sert à supporter de manière rigide le moule (12) tandis qu'il est rempli.

6. Procédé selon l'une quelconque des revendications précédentes, dans lequel la charge d'alimentation comprend un polymère ou une résine.

7. Procédé selon l'une quelconque des revendications 1 à 5, dans lequel la charge d'alimentation comprend une poudre métallique et/ou céramique.

8. Procédé selon la revendication 7, dans lequel la charge d'alimentation comprend un liant mélangé à la poudre métallique et/ou céramique.

9. Procédé selon la revendication 7 ou revendication 8 dans lequel la charge d'alimentation est une pâte.

10. Procédé selon l'une quelconque des revendications 7 à 9, dans lequel la pièce moulée (18) est une pièce verte et le procédé comprend en outre le frittage de la pièce verte.

11. Procédé selon l'une quelconque des revendications précédentes, dans lequel le matériau pouvant fondre est un matériau polymère, qui peut être une cire ou une résine.

12. Procédé selon l'une quelconque des revendications précédentes, dans lequel le matériau pouvant fondre présente un point de fusion dans la plage de 50 à 600 degrés Celsius, ou un point de fusion dans la plage de 60 à 500 degrés Celsius, ou un point de fusion dans la plage de 70 à 400 degrés Celsius, ou un point de fusion dans la plage de 80 à 300 degrés Celsius, ou un point de fusion dans la plage de 80 à 200 degrés Celsius, ou un point de fusion dans la plage de 80 à 150 degrés Celsius.

13. Procédé selon l'une quelconque des revendications précédentes, dans lequel l'étape de remplissage du moule avec la charge d'alimentation tandis que le moule est supporté dans le logement comprend l'injection de la charge d'alimentation dans le moule ou le pressage de la charge d'alimentation dans le moule dans le logement.
